# EUROPEAN PATENT APPLICATION

(11) **EP 4 104 958 A1**
(43) Date of publication of application: **21.12.2022**
(21) Application number: 22178133.9
(22) Date of filing: 09.06.2022
(51) Int. Cl.: B23B 51/02, B24B 19/04

(54) **DRILL COMPONENT**

(30) Priority: 14.06.2021 DE 102021115315
(71) Applicant: Technische Universität Darmstadt, 64289 Darmstadt (DE)
(72) Inventor: HEYSER, Dennis, 64289 Darmstadt (DE)
(74) Representative: LifeTech IP Spies & Behrndt Patentanwälte PartG mbB

(57) **Abstract**

A drill component (100) for a drilling device includes a body clearance (no) extending helically along the drill component (100), a margin (120) also extending helically along the drill component (100), adjacent to and projecting radially beyond the body clearance (110), and a flank (130) at which the body clearance (110) and the margin (120) terminate at a tip (105) of the drill component (100). The margin (120) has a variable width (B) along its helical extension.

## Description

The present invention relates to a drill component for a drilling device and to a method of manufacturing a drill component for a drilling device, and in particular to a local expansion of the margins of drilling tools.

### BACKGROUND

Drilling tools, in particular twist drill bits, have helically wound flutes along their essentially cylindrical shape, which are separated from each other by lands. On the radial outer side of a land is the so-called body clearance, which is adjacent to radial elevations, the so-called margins.

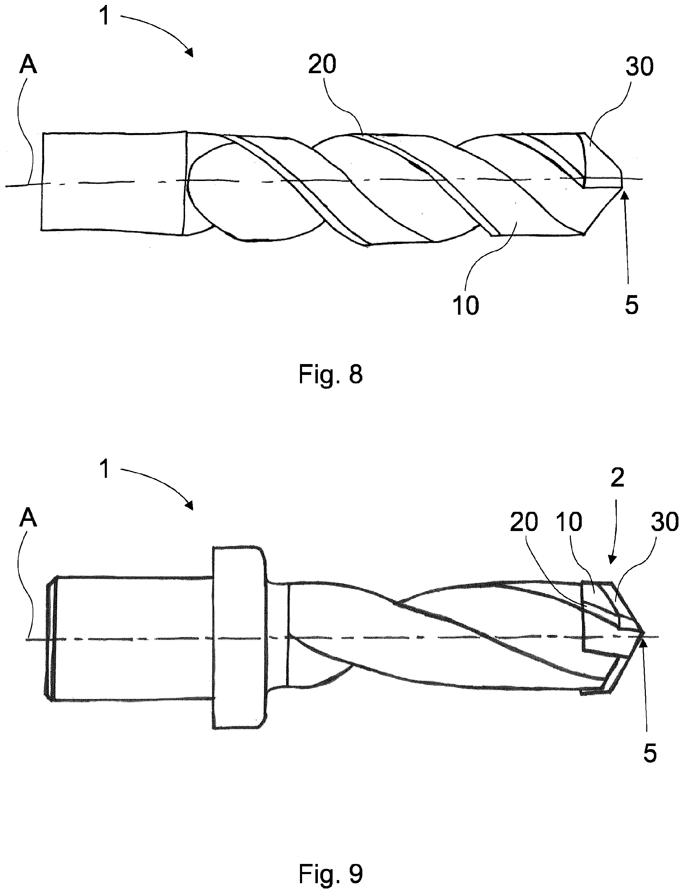

**Fig. 8** shows a conventional drill bit 1, which has a body clearance 10 and at least one margin 20 on a land between flutes. The body clearance 10 and the margin 20 end at a flank 30 at a tip 5 of the conventional drill bit 1.

**Fig. 9** shows a conventional drill bit 1 of an exchangeable tip drill with a conventional tip component 2. The conventional tip component 2 has a body clearance 10 and at least one margin 20 on a land between flutes. The body clearance 10 and the margin 20 end at a flank 30 at a tip 5 of the conventional tip component 2. The tip component 2 is installed onto the compatible drill bit 1 of the exchangeable tip drill to form a cutting edge for creating holes in workpieces. The tip component 2 has a stem that mounts the tip component 2 to the end of a drill bit 1 of the exchangeable tip drill. In an exchangeable tip drill, a worn-out tip component 2 may be replaced with a new tip component 2 of the same type or of a different type, often without removing the drill bit 1 of the exchangeable tip drill. Exchangeable tip drills generally require fewer tool changes than solid tools in high-volume metalworking and fabrication applications with high speeds, high feeds, and difficult-to-machine materials.

Margins usually run together with the lands, or the helical body, of the twist drill bit in a spiral up to a shank of the tool. They are often formed along a secondary cutting edge in the immediate vicinity of the flutes, but can also be arranged at other positions on the land. For example, document DE 3820485 C1 discloses an arrangement of several margins at different positions on a land.

Margins primarily serve to prop the drilling tool against the borehole during the drilling process. In particular, their number can influence the guidance of the drill bit or the removal of chips, as disclosed in DE 10 2008 049 508 A1. The surface of the margins also influences the friction between the drilling tool and the drill hole.

Furthermore, margins also have an effect on bending vibrations of the drilling tool. Such bending vibrations lead to undesired shape deviations in the resulting drill hole. The vibration-damping effect of the margin can be influenced by its precise design. In this context, document DE 10 2006 062 429 A1, for example, discloses local elevations of the margins, by means of which bending vibrations of the drilling tool can be reduced. It is furthermore known in the prior art that margins which are wider over the entire tool length can reduce bending vibrations in the drilling process.

However, these measures to reduce vibrations lead to additional friction between the tool and the workpiece, due to which the deviations in shape or diameter of the drill hole can also increase. The friction of the drilling tool on the drill hole also generates more heat. In addition, changes to the margins are not always easy to implement in the manufacture of drilling tools, which usually require complex manufacturing processes and precise machines.

There is a continuous need for improved drilling tools to optimize friction, stability and vibration behavior in use, overcoming the aforementioned disadvantages.

### BRIEF DESCRIPTION OF THE INVENTION

A contribution to this improvement is provided by a drill component for a drilling device according to claim 1 and a method of manufacturing a drill component for a drilling device according to claim 9. The dependent claims relate to advantageous further embodiments of the objects of the independent claims.

The present invention relates to a drill component for a drilling device. The drill component may be configured to be installable in, or mountable to, the drilling device. The drill component may however also be an integral part of the drilling device. The drill component may in particular be a cutting tool, or a part of a cutting tool, of the drilling device. The drill component may have an essentially cylindrical shape, wherein an axis of the cylinder coincides with a corresponding axis of the drilling device if the drill component is installed in the drilling device. The drill component has at least one body clearance, which is part of a surface of a land between flutes, and extends helically along the drill component. This may mean that it winds around the axis of the essentially cylindrical shape of the drill component. The drill component has at least one margin that also extends spirally along the drill component, adjoins the body clearance, and extends radially beyond the body clearance. Furthermore, the drill component comprises a flank at a tip of the drill component at which the body clearance and the margin terminate. The margin has a variable width along its helical extension. In particular, the variable width may be such that a local widening is formed in the margin. Here, the term local may mean that a length of the widening measured along the helical extension of the margin is small compared to a length of the margin measured along the helical extension of the margin.

Optionally the drill component is a twist drill bit having at least one body clearance which is part of a surface of a land between flutes, and extends helically along the twist drill bit. The twist drill bit has at least one margin that also extends spirally along the twist drill bit, adjoins the body clearance, and extends radially beyond the body clearance. Furthermore, the twist drill bit comprises a flank at a tip of the twist drill bit at which the body clearance and the margin terminate. The margin has a variable width along its helical extension.

In further embodiments, the drilling device is an exchangeable tip drill, and the drill component is a tip component for the exchangeable tip drill. Again, the tip component has at least one body clearance which is part of a surface of a land between flutes, and extends helically along the tip component. The tip component has at least one margin that also extends spirally along the tip component, adjoins the body clearance, and extends radially beyond the body clearance. Furthermore, the tip component comprises a flank at a tip of the tip component at which the body clearance and the margin terminate. The margin has a variable width along its helical extension.

In the following, the description will focus on an embodiment where the drill component is a twist drill bit. However, it is understood that the description applies analogously to all drill components as described above, and in particular to tip components.

The exact position of the margin is not restricted. The margin can be adjacent to the body clearance on one side only, or it can be limited on both sides by the body clearance. In particular, the margin can be formed in the immediate vicinity of a secondary cutting edge of the twist drill bit.

The variable width may be determined in a circumferential or azimuthal direction, perpendicular to a longitudinal axis of the twist drill bit. A length dimension or a radian dimension may be useful for this purpose. In embodiments, there are areas along the margin where the variable width increases in an axial course, as well as areas in which it decreases. In between, the variable width may be piecewise constant.

The twist drill bit may have one cutting edge, two cutting edges, but also more than two cutting edges, as well as a corresponding number of flutes and lands. On a land, the twist drill bit may have only one or several margins, including some with variable widths. Some lands may also be configured without margins. Accordingly, the twist drill bit may also have several body clearances.

The twist drill bit has no further limitations, and may in particular be adapted to a specific use. For example, the twist drill bit may be suitable for drilling metal, wood, or stone. It may be designed for application to materials of any hardness and chip type. A point angle between main cutting edges as well as a side chip angle or helix angle between a longitudinal axis of the essentially cylindrical twist drill bit and the flute (or web) can be freely selected. Also, the twist drill bit may principally have any length and diameter. In embodiments, the twist drill bit is particularly suitable for deep-hole drilling.

Optionally, the variable width of the margin is given by one or more locally formed contact areas or by a spiral wave. The term contact area is intended to mean a widening of the margin that is accompanied by at least one abrupt change in the variable width of the margin. The contact area is local if it extends, in a direction of the longitudinal axis of the twist drill bit, only over a small distance compared to a length of the margin. The contact area has substantially the same radius as the margin, i.e. its surface, or contact surface, is located at the same radial distance from a longitudinal axis of the substantially cylindrical twist drill bit as a surface of the margin. In particular, therefore, the contact area usually comes into contact with the resulting drill hole when the twist drill bit is used.

The term spiral wave is intended to mean that the variable width changes continuously along the margin. The change may be formed in a limited region along the margin. The shaft may however also have a period or quasi-period, i.e. a period which changes with the axial position.

Optionally, at least one local contact area is adjacent to the flank. However, local contact areas can also be formed at any one or more locations along the twist drill bit.

Optionally, at least one of the local contact areas may have a contact surface that is substantially triangular or trapezoidal in shape. In this case, the contact surface is a surface of the contact area that usually comes into contact with the drill hole. In particular, a local contact area adjacent to the flank may be in the form of a triangle, and a contact area located at another location along the margin may be in the form of a trapezoid, or vice versa.

Optionally, the variable width at any point along the twist drill bit in an azimuthal direction corresponds to at most one half of a corresponding width of the body clearance, or it corresponds to at most one quarter of a circumference of the twist drill bit at that point. In particular, a contact surface or even the shaft thus need not completely interrupt the body clearance. The body clearance is then continuous along an axial direction of the twist drill bit. However, particularly in the case of a plurality of margins, for example distributed over a plurality of cutting edges or a plurality of body clearances, and/or in the case of a plurality of margins on one body clearance, it may be advantageous to design the variable width in such a way that the body clearance, or a part of a body clearance, between two margins is locally interrupted. However, it has proven advantageous to keep the variable width of the margin limited even in such a case. In particular, the variable width is thus not configured to correspond, at some point along the twist drill bit, to the circumference of the twist drill bit. Rather, in embodiments, limiting the variable width to values below a quarter of the circumference of the twist drill bit at the respective axial position has proven advantageous. However, depending on the embodiment, another fraction may be used as a value of limitation.

Optionally, the variable width is configured to suppress a vibration of the twist drill bit. It has been found that a local contact area adjacent to the flank dampens a first bending mode or bending vibration of the twist drill bit fixed on one side (e.g. to a drilling machine). Further bending modes/bending vibrations can be suppressed by forming local contact areas along the twist drill bit at locations of expected vibration maxima. Damping can be improved by a suitable choice of the shape of the contact areas, and various features of a geometry and material of the twist drill bit can play a role. From the geometry and material of the twist drill bit, locations where vibration maxima are expected during operation may be predicted theoretically in order to provide suitable contact areas at these positions.

Embodiments further relate to a method of manufacturing a twist drill bit comprising the following steps:
providing a twist drill bit blank having a land between two flutes, the land extending helically along the twist drill bit;
abrading a surface of the land so as to form a body clearance extending helically along the twist drill bit; thereby
variably exempting one or more regions of the surface of the land so as to form a margin extending helically along the twist drill bit and having a variable width along its helical extension.

The twist drill bit blank can already have a nominal diameter or target diameter of the twist drill bit to be produced; however, the nominal diameter can also be produced after the margins have been ground.

In embodiments, material may be removed from the twist drill bit blank in radial direction by means of a grinding wheel. For this, the twist drill bit blank rotates and moves axially (depending on the machine type, it may also be that the grinding wheel is moved), so that a margin with a previously defined radius remains. This removal of material may optionally be carried out in several steps.

The method furthermore usually comprises a prior determining of the variable width. In particular, a position and/or a shape of local contact areas and/or waves or, more generally, of width maxima may be determined, as appropriate. The positions and/or the shapes may be determined, for example, by means of a theoretical calculation of maxima of bending vibration modes, taking into account, for example, a geometry and/or a material of the twist drill bit.

Optionally, the exempting further comprises at least one of the following steps:
skipping the grinding of a part, or of several parts, of the surface of the land in order to form one or more local contact areas,
changing a grinding direction to omit a part, or several parts, of the surface of the land to form a local contact area,
regrinding, so as to limit the variable width at any location along the twist drill bit in an azimuthal direction to at most one-half of a corresponding width of the body clearance and/or at most one-quarter of a circumference of the twist drill bit.

In particular, the skipping may be performed by having a suitable machine (e.g., a grinding machine) with a grinding wheel first perform the abrading, e.g. by removing material from the twist drill bit blank as described previously, and then stopping rotation and axial displacement (of the traverse motion, not a rotation of the grinding wheel) at a predetermined axial position. The grinding wheel may then be moved radially away from the drill. The axial displacement and rotation of the twist drill bit blank may now be continued, until the desired width of the additional contact area plus the width of the grinding wheel is obtained in the axial direction. The grinding wheel may subsequently be moved in the radial direction back to a previously set value, and the abrading may be continued.

Changing the grinding direction may be performed, for example, as follows: First, an abrading is performed starting from a tip of the twist drill bit blank, wherein only a front section of the margins is completed. This defines an edge of a local contact area which is closer to the tip. Subsequently, the abrading is performed starting from a shank of the twist drill bit blank, in a direction opposite to the previous abrading, in order to precisely define an axial length of the local contact area.

The regrinding can be performed, for example, before or after one or more executions of skipping and/or of changing the abrading direction, in order to define the width of the local contact areas by another grinding operation.

The shape and angle of the local contact areas to the actual margin may be determined via a shape as well as via an angle of attack of the grinding wheel.

Optionally, the method further comprises grinding a tip of the twist drill bit blank so as to form or define a local contact area adjacent to a flank. Advantageously, determining the size of this local contact area may be carried out simultaneously with this formation of the tip of the twist drill bit. The local contact area may be created by an exempting during the abrading to form the body clearance. The grinding of the tip then only defines an axial extension or the height of the contact area.

Essential aspects of the process can also be described as follows: Drilling tools, especially twist drill bits, have margins to support the tool relative to the drill hole during the drilling process and thus to reduce bending vibrations of the tool. Usually, the margins run together with the helical body of the drill bit in a spiral up to the shank of the tool.

Traditionally, precision-drilled holes are created as follows: First, a hole with a smaller diameter is drilled, and subsequently another tool (e.g. a reamer) is used to create the desired diameter with the required tolerances.

Previous investigations have shown that wider margins over the entire tool length can reduce bending vibrations in the drilling process, resulting in less deviation in the shape of the drilled holes. However, additional friction between the tool and the workpiece due to the wider margins can in fact increase the diameter deviation of the drilled holes.

For the twist drill bit presented here, bending vibrations of the drilling tool are reduced by increasing a contact area or guiding area only locally at those positions on the drilling tool where maximum vibration amplitudes are to be expected. An advantageous first local contact position has been shown to be at the tool tip. For long drilling tools in particular, additional axial positions of maximum vibration amplitudes can be calculated, in order to optimize the contact area locally at these positions as well. The local contact areas (at the tip as well as at other points along the twist drill bit) can reduce tilting and deflection of a tool center axis or rotational or longitudinal axis at the tip, which results in cutting loads being distributed more evenly among individual cutting edges, and thus in that the twist drill bit as a whole is less strongly triggered to exhibit bending vibrations. Furthermore, the additional contact areas dampen possibly generated bending vibrations.

With regard to the presented method of manufacturing the twist drill bit, a nonlinear vibration model of the twist drill bit to be manufactured may be created, in particular admitting a prior determination of positions and shapes of the local contact areas. The model may also be used to retrace various drilling tests, and to subsequently perform a theoretical geometry optimization using numerical simulations.

Compared with the prior art, the twist drill bit and the method offer the following advantages, among others: The twist drill bit makes it possible to produce precise drill holes without the otherwise frequently necessary reworking of the drill hole by an additional tool, as for example by a reamer. The variable width or local widening of the margin optimizes the twist drill bit locally, i.e. not over an entire tool length. The margin can thus be made relatively thin over wide areas. Overall, this leads to better drilling results; in particular, the deviation in shape and diameter of the drilled holes can be significantly reduced. Drilling tests with prototypes have shown that significantly smaller tolerances in terms of shape and diameter deviation can be maintained with the new tools compared to conventional tools, in particular conventional tools with wider margins.

The steps for manufacturing the presented twist drill bit can be incorporated into known manufacturing processes without much additional effort.

### BRIEF DESCRIPTION OF THE FIGURES

The embodiments of the present invention will be better understood by means of the following detailed description and accompanying drawings of the various embodiments, which, however, should not be construed as limiting the disclosure to the specific embodiments, but are intended for explanation and understanding only.
- Fig. 1: sketches an embodiment of the twist drill bit according to the present invention.
- Fig. 2: shows a further embodiment of the twist drill bit.
- Fig. 3: shows images of a design of a local contact area in a comparison with a conventional drill.
- Fig. 4: illustrates results of using an embodiment of the twist drill bit, compared to results by a conventional drill.
- Fig. 5: illustrates further results of using the two drills, based on the holes from Fig. 4.
- Fig. 6: shows steps of a method for manufacturing a twist drill bit according to the present invention.
- Fig. 7: shows a further embodiment of a drill component according to the present invention, wherein the drill component is a tip component for an exchangeable tip drill.
- Fig. 8: sketches a conventional drill.
- Fig. 9: sketches a conventional drill bit of an exchangeable tip drill with a conventional tip component.

### DETAILED DESCRIPTION

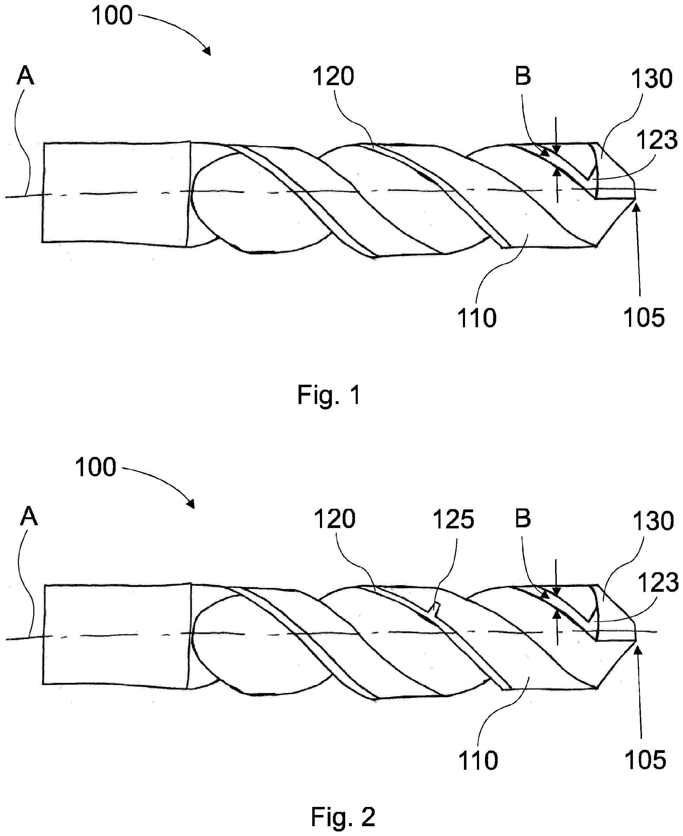

**Fig. 1** shows an embodiment of a twist drill bit 100, with a body clearance 110 extending helically along the twist drill bit 100, and a margin 120 also extending helically along the twist drill bit 100, adjacent to and extending radially beyond the body clearance 110. The twist drill bit 100 furthermore has a flank 130 at which the body clearance 110 and the margin 120 terminate at a tip 105 of the twist drill bit 100. The margin 120 has a variable width B along its helical extension. In particular, the variable width B in this embodiment is given by a locally formed contact area 123. The local contact area 123 is adjacent to the flank 130 and has a substantially triangular contact surface. A surface of the margin 120 and the contact surface of the local contact area 123 together form a common surface. In particular, points on this surface located at the same axial position have an equal radial distance from a longitudinal axis A of the twist drill bit 100. This radial distance is maximal at this axial position, i.e. points of the body clearance 110 located at this axial position are not at this maximal radial distance from the longitudinal axis A. The twist drill bit 100 may be tapered in axial extent. Advantageously, a diameter of the twist drill bit 100 decreases from the tip 105 (starting from a nominal diameter) in the direction of the shank. In this way, in particular, friction can be minimized. The local contact area 123 can in particular reduce low-frequency bending vibrations of the twist drill bit 100. For such vibrations, a local maximum of the amplitude is located at the tip 105 of the tool, usually regardless of the tool geometry. Advantageously, therefore, at least one local contact area may be located at the tip of the tool, as shown here.

**Fig. 2** shows a sketch of a further embodiment of the twist drill bit 100. Here, in addition to the first local contact area 123, a further local contact area 125 is formed. Like the local contact area 123, the further local contact area 125 may in particular be formed to suppress vibration of the twist drill bit 100.

The further local contact area 125 may have a trapezoidal outline. Its position may in particular be optimized to suppress a higher bending vibration mode of the twist drill bit 100. For this purpose, a position of a maximal amplitude of the corresponding vibration mode may be determined as a function of the geometrical and material parameters of the twist drill bit 100. The shape of the contact areas can also be selected for optimal vibration suppression, but also in favor of the simplest possible manufacturing.

In general, the twist drill bit may have a large number of local contact areas. The contact areas are advantageously placed in the axial direction where maximal vibration amplitudes are to be expected. The corresponding axial positions usually depend on the remaining tool geometry (e.g. on a ratio of the length to the diameter of the twist drill bit 100, on a twist angle, etc.).

Depending on the geometry and composition of the twist drill bit, it may also be advantageous not to form the contact area 123 at the tip 105 in particular. For example, in order to meet special requirements, the tip may be designed in such a way that a local contact area at this point is of less importance, or unnecessary.

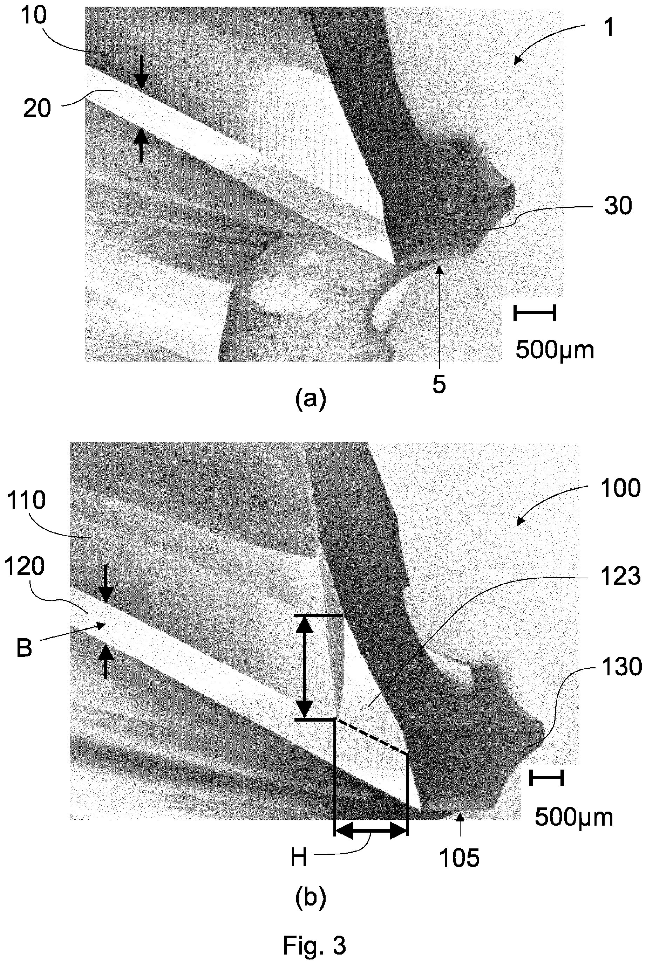

Fig. **3** shows, in a part (a), a picture of a tip 5 of a conventional drill 1 with a flank 30, a body clearance 10 and a margin 20. In a part (b) of the figure, an embodiment of the presented twist drill bit 100 is shown. This twist drill bit 100 also comprises a flank 130 at the tip 105, and has a body clearance 110 and a margin 120.

Both the conventional drill 1 and the drill 100 have a diameter of 10 mm. The length of the cutting part (without the shank for clamping) is 142 mm in each case. The longitudinal axes of drills 1, 100 extend horizontally in this figure.

The margins 20, 120 in part (a) and part (b) each have a width of approximately 0.5 mm at the points indicated by arrows. The width B of the margin 120 of the twist drill bit in part (b) is however variable: In particular, a local contact area 123 is formed which is adjacent to the flank 130 and contributes to the surface of the margin 120 by its contact surface. The local contact area extends over a height H of 1.0 mm in the axial direction. The variable width B is 1.5 mm (in addition to the margin width of 0.5 mm) at its largest extent visible in part (b).

This design of the margin 120 (and in particular the variable width B) may depend on characteristics of the twist drill bit, such as its length-to-diameter ratio, its material, or a helix or clearance angle. The twist drill bit may furthermore be coated. Usually, these parameters also depend on the material to be machined.

The local contact area 123 results in particular in suppression of bending vibrations of the twist drill bit during use.

It is emphasized that the numerical values shown here are only intended to be understood as an example for a tool. Analogous vibration effects, which are reduced by the embodiment shown in part (b), also occur in tools with significantly different dimensions.

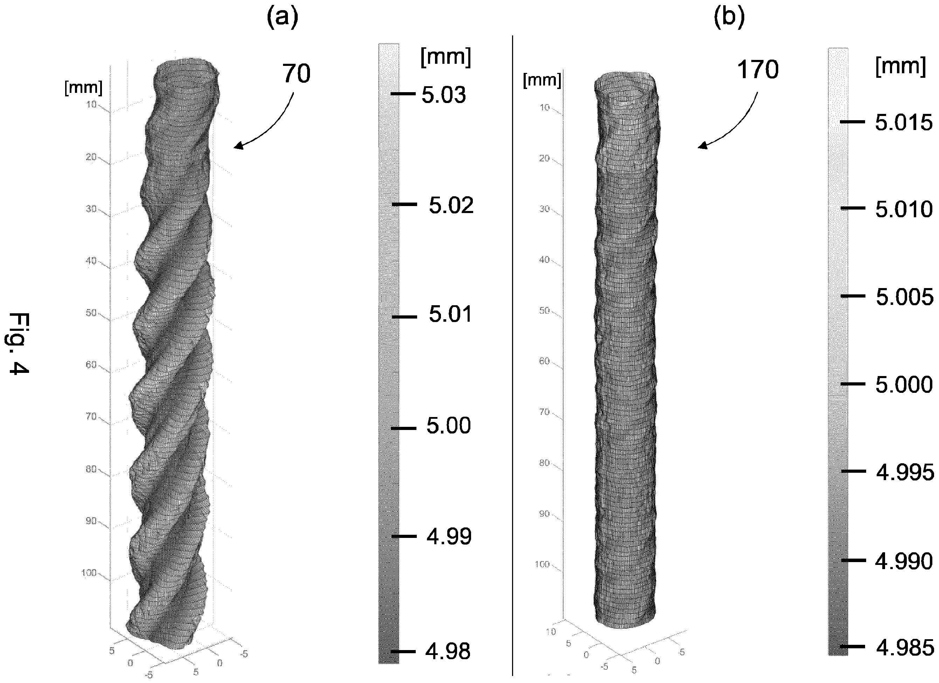

Fig. **4** illustrates results from an application of an embodiment of the twist drill bit made of solid carbide, compared to results by a conventional solid carbide drill in an aluminum bore.

In a part (a) of the figure, a surface of a drill hole 70 created by a conventional drill is shown. In a part (b) of the figure, a surface of a drill hole 170 produced by a twist drill bit of the type disclosed herein, having a local contact region 123 at the tip 105, is shown.

In both cases, a pilot hole with a diameter of 4 mm was drilled first. Both drills have a body clearance width of 0.3 mm. The respective drill hole 70, 170 was produced in both cases with a feed rate of 0.375 mm/rev and a cutting speed of 150 m/min, according to manufacturer's specifications of the conventional tool. In each case, one drill hole is shown over a length, or depth, of approx. 110 mm. A mean diameter of the drill holes 70, 170 is approx. 10 mm in both cases. Radial deviations from the mean diameter are shown exaggerated by a factor of 67. In both parts (a), (b) of the figure, a scale in each case represents a gray scale coding for the radius of the associated, essentially cylindrical drill hole surface 70, 170.

It can be seen that under the above circumstances, the deviations in part (b) of the figure are significantly smaller than in part (a) of the figure. This can be traced back to the suppression of bending vibrations by the contact area 123.

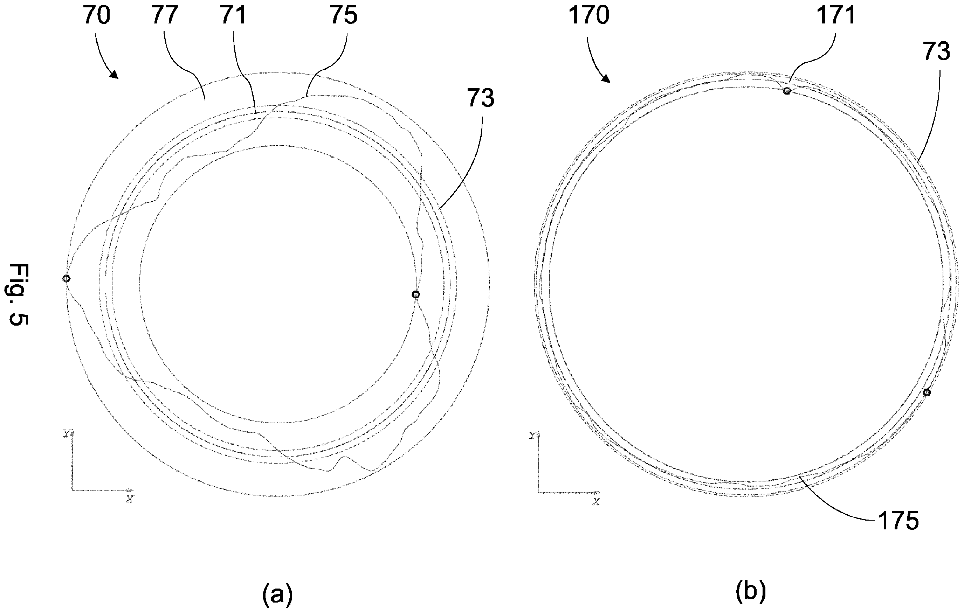

**Fig. 5** illustrates further results of the comparison from Fig. 4. In part (a) of the figure, a cross-section through the drill hole 70 of the conventional drill is shown at a depth of 60 mm; cf. part (a) in Fig. 4. A circle 71 represents an average drill hole cross-section. A contour 75 shows the actual shape of the drill hole 70 at this depth. The course of the contour 75 in the radial direction is shown exaggerated by a factor of 37.

A target tolerance range 73 of ±10 µm in diameter is marked around the circle 71. The actually measured contour 75 runs in a range 77 that is significantly larger than the targeted tolerance range 73.

In part (b) of the figure, a cross-section through the borehole of the twist drill bit according to the invention at a depth of 60 mm is shown; cf. part (b) in Fig. 4. The circle 171 here also represents the central drill hole cross-section. A contour 175 shows the actual shape of the drill hole at this depth. Here, the course of contour 175 in radial direction is also shown exaggerated by 37 times. In this case, the actual measured contour 175 runs within the targeted tolerance range 73.

This figure thus also illustrates how the additional contact area 123 can improve the precision of a drill hole. In embodiment examples, in particular a diameter deviation and a shape deviation (deviation f_{K} of roundness with the LSC method according to the standard DIN EN ISO 1101 (2014-04)) can each be improved by at least one tolerance grade (IT) according to DIN EN ISO 286-1 (2010-11).

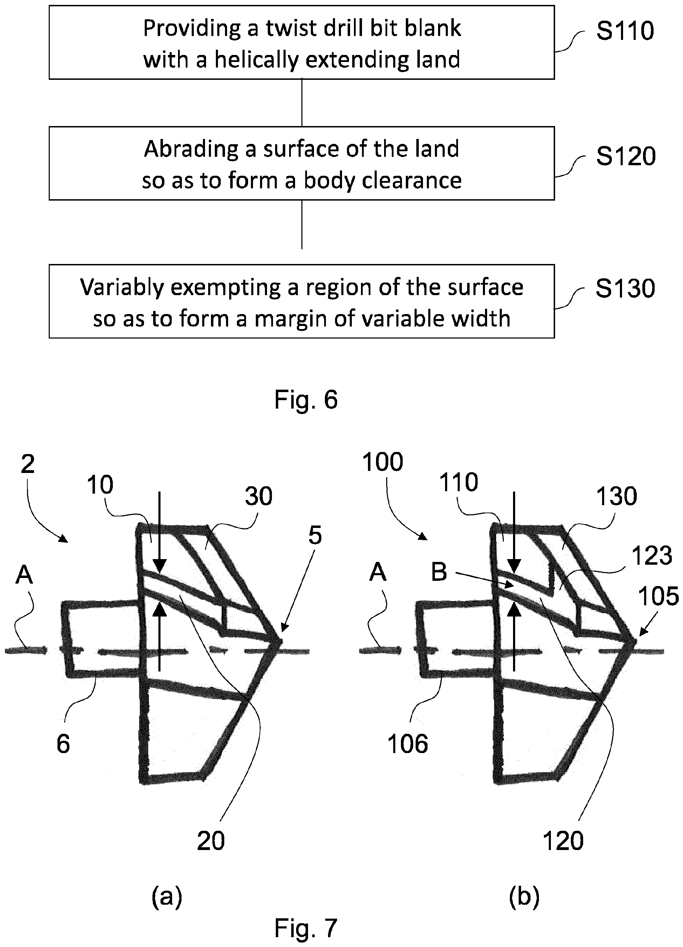

**Fig. 6** shows steps of a method for manufacturing a twist drill bit 100 having a margin 120 of variable width B. A first step comprises providing S110 a twist drill bit blank already having a land between two flutes, the land extending spirally along the twist drill bit blank, or respectively along the twist drill bit 100 to be formed therefrom. A further step comprises abrading S120 a surface of the land so as to form a body clearance 110 extending spirally along the twist drill bit blank, or twist drill bit 100. In this process, the method further comprises variably exempting S130 a portion of the surface of the land so as to form the margin 120, extending spirally along the twist drill bit blank or twist drill bit 100 and having variable width B along its helical extension.

In particular, the method may also comprise a prior determination of the variable width B. In this process, for example, positions and/or shapes of local contact areas 123, 125 or of shafts can be adapted to positions of maxima of amplitudes of natural vibration modes of the twist drill bit 100.

The exempting S130 may optionally comprise skipping one or more regions of the surface of the land in order to form one or more local contact regions 123, 125. Alternatively, or additionally, the exempting S130 may also comprise changing an abrading direction to recess a region of the surface of the land in order to form, for example, a local contact region 125 at an axial position away from a tip of the twist drill bit blank or twist drill bit 100. Furthermore, the exempting S130 may also include regrinding so as to limit the variable width B at each position along the twist drill bit 100 in an azimuthal direction to at most one-half of a corresponding width of the body clearance 110, or to at most one-quarter of a circumference of the twist drill bit, at the respective axial position.

The method may further comprise grinding a tip of the twist drill bit blank to form a local contact area 123 adjacent to a flank 130.

**Fig. 7** shows, as a further embodiment of the drill component presented herein, a tip component 100 for an exchangeable tip drill 1, Fig. 9.

A part (a) of this figure shows, for comparison, a conventional tip component 2 for an exchangeable tip drill. The conventional tip component 2 comprises a flank 30 at the tip 5, a body clearance 10 and a margin 20. The margin 20 extends helically along the tip component 2, and has a constant width. The conventional tip component 2 comprises a stem 6 by which the conventional tip component 2 can be mounted on a drill bit of a corresponding exchangeable tip drill.

A part (b) of this figure shows the tip component 100 which is an embodiment of the drill component as presented herein. This tip component 100 also comprises a flank 130 at the tip 105, and has a body clearance 110 and a margin 120. The tip component 100 further comprises a stem 106 by which the tip component 100 may be mounted on a drill bit of a corresponding exchangeable tip drill 1, Fig. 9. The margin 120 extends helically along the tip component 100 and has a variable width B. In particular, the variable width B of the tip component 100 is such that a local contact area 123 is formed where the margin 120 adjoins the flank 130. If the drill bit of the exchangeable tip drill 1, Fig. 9 is equipped with the tip component 100, the local contact area 123 results in particular in suppression of bending vibrations of the drill bit during use. Depending on size and further constraints of the tip component 100, further local contact areas maybe added to the margin 120 along its helical extent.

The features disclosed in the description, the claims and the figures may be essential to the realization of the invention either individually or in any combination.

### LIST OF REFERENCE SIGNS

- 1: conventional drill
- 2: conventional tip component
- 5: tip
- 6: stem
- 10: body clearance
- 20: margin
- 30: flank
- 70: drill hole
- 71: averaged drill hole cross section
- 73: tolerance range
- 75: drill hole contour
- 77: range of deviations
- 100: drill component
- 105: tip
- 106: stem
- 110: body clearance
- 120: margin
- 123, 125: contact areas
- 130: flank
- 170: drill hole
- 171: averaged drill hole cross section
- 175: drill hole contour
- A: longitudinal axis
- B: variable width
- H: axial length of an additional contact area
- S110, S120,: steps of a method

## Claims

1. A drill component (100) for a drilling device, comprising:
a body clearance (110) extending helically along the drill component (100);
a margin (120) also extending helically along the drill component (100), adjacent to and projecting radially beyond the body clearance (110); and
a flank (130) at which the body clearance (110) and the margin (120) terminate at a tip region (105) of the drill component (100),
wherein the margin (120) has a variable width (B) along its helical extension.

2. The drill component (100) according to claim 1, wherein the drill component (100) is a twist drill bit.

3. The drill component (100) according to claim 1, wherein the drilling device is an exchangeable tip drill, and wherein the drill component (100) is a tip component for the exchangeable tip drill.

4. The drill component (100) according to any one of the preceding claims, wherein the variable width (B) is given by one or more locally formed contact areas (123, 125) or by a wave along the helical extension of the margin (120).

5. The drill component (100) according to claim 4, wherein at least one local contact area (123) is adjacent to the flank (130).

6. The drill component (100) according to claim 4 or claim 5, wherein at least one of the local contact areas (123, 125) has a contact surface that substantially conforms to one of the following shapes:
- a triangle,
- a trapezoid.

7. The drill component (100) according to any one of the preceding claims, wherein the variable width (B) at any location along the twist drill bit (100) in an azimuthal direction is at most one of the following:
- one half of a corresponding width of the body clearance (110),
- a quarter of a circumference of the twist drill bit (100).

8. The drill component (100) according to any one of the preceding claims, wherein the variable width (B) is configured to suppress a vibration of the twist drill bit (100).

9. A method of manufacturing a drill component (100) from a drill component blank, comprising the following steps:
providing (S110) the drill component blank, wherein the drill component blank has a land between two flutes, and the land extends helically along the twist drill bit blank;
abrading (S120) a surface of the land so as to form a body clearance (110) extending helically along the drill component (100); thereby
variably exempting (S130) one or more regions of the surface of the land so as to form a margin (120), the margin (120) extending helically along the drill component (100) and having a variable width (B) along its helical extension.

10. The method according to claim 9, wherein the exempting (S130) comprises at least one of the following steps:
skipping a part of the surface of the land in order to form one or more local contact areas (123, 125),
changing an abrading direction in order to exempt a part of the surface of the land to form a local contact area (125),
regrinding so as to limit the variable width (B) at any location along the drill component (100) in an azimuthal direction to at most one-half of a corresponding width of the body clearance (110) or at most one-fourth of a circumference of the drill component (100).

11. The method according to claim 9 or claim 10, wherein the method further comprises:
grinding a tip of the drill component blank so as to form a local contact area (123) adjacent to a flank (130).
